# EUROPÄISCHE PATENTSCHRIFT

(11) **EP 2 484 637 B1**
(45) Veröffentlichungstag und Bekanntmachung des Hinweises auf die Patenterteilung: **03.04.2013**
(21) Anmeldenummer: 11153169.5
(22) Anmeldetag: 03.02.2011
(51) Int. Cl.: C01G 49/00, C09C 1/24, C04B 35/628, C01G 49/02

(54) **Eisen-Silicium-Oxidpartikel mit verbesserter Aufheizrate im magnetischen und elektromagnetischen Wechselfeld**
Iron-silicon-oxide particles with improved heating rate in magnetic and electromagnetic alternating fields
Particule d'oxyde de fer-silicium ayant un taux de chauffage amélioré dans le champ alternatif magnétique et électromagnétique

(43) Veröffentlichungstag der Anmeldung: 08.08.2012
(73) Patentinhaber: Evonik Degussa GmbH, 45128 Essen (DE)
(72) Erfinder: Katusic, Stipan, 65812, Bad Soden (DE); Kreß, Peter, 63791, Karlstein (DE); Albers, Peter, 63450, Hanau (DE); Herzog, Harald, 63791, Karlstein (DE)

(56) Entgegenhaltungen:
- EP-A1- 2 000 439
- WO-A1-2010/063557
- WO-A1-2010/149463

## Beschreibung

Die Erfindung betrifft Eisen-Silicium-Oxidpartikel mit verbesserter Aufheizrate im magnetischen Feld, deren Herstellung und deren Verwendung.

In der WO 2010/063557 werden Eisen-Silicium-Oxidpartikel offenbart, die zur induktiven Erwärmung von Materialien in einem magnetischen oder elektromagnetischen Wechselfeld eingesetzt werden können. Die Partikel weisen eine Kern-Hülle-Struktur auf, mit den Eisenoxidphasen Hämatit, Magnetit und Maghemit als Kern, einer amorphen Hülle aus Siliciumdioxid und einer oder mehreren sich zwischen Hülle und Kern befindlichen Verbindungen aus den Elementen Silicium, Eisen und Sauerstoff. Weiterhin wird offenbart, dass der Kern 1-10 Gew.-% Hämatit mit einer Kristallitgröße von 20-120 nm, 20 - 50 Gew.-% Magnetit mit einer Kristallitgröße von 20 - 60 nm und 40 - 75 Gew.-% Maghemit mit einer Kristallitgröße von 15 - 50 nm aufweisen kann. Die Partikel werden hergestellt, indem man ein Gemisch aus Siliciumverbindungen, von denen eine Monosilan ist, und einer Eisenverbindung in einer Wasserstoff-/Sauerstoffflamme umsetzt.

Es hat sich gezeigt, dass zur induktiven Aufheizung in einem magnetischen oder elektromagnetischen Wechselfeld das gleichzeitige Vorliegen der drei Eisenoxidmodifikationen essentiell ist um akzeptable Aufheizraten zu erzielen. Dennoch schien es wünschenswert die erreichbaren Aufheizraten weiter zu verbessern. Das in WO 2010/063557 offenbarte Verfahren erlaubte jedoch nicht die Herstellung von Eisen-Silicium-Oxidpartikeln, die diesem Anspruch gerecht werden konnten.

Die technische Aufgabe der vorliegenden Erfindung bestand daher in der Bereitstellung von bezüglich der erzielbaren Aufheizrate weiter verbesserten Eisen-Silicium-Oxidpartikeln. Eine weitere Aufgabe bestand in der Bereitstellung eines Verfahrens zur Herstellung dieser Partikel.

Gegenstand der Erfindung sind Eisen-Silicium-Oxidpartikel, die einen Kern und eine äußere Hülle umfassen, wobei der Kern die Eisenoxidmodifikationen Maghemit, Magnetit und Hämatit enthält und die äußere Hülle im wesentlichen oder ausschließlich aus amorphem Siliciumdioxid besteht, dadurch gekennzeichnet, dass
a) H_{0,20nm}/H_{0,25nm} ≤ 0,2, bevorzugt 0,05 - 0,20, besonders bevorzugt 0,10 - 0,18, ganz besonders bevorzugt 0,12 - 0,16 ist , mit
   H_{0,20nm} = Helligkeit des durch Elektronenbeugung ermittelten Debye-Scherrer-Beugungsringes mit einem Netzebenenabstand von 0,20 +/- 0,02 nm, umfassend Maghemit und Magnetit und
   H_{0,25nm} = Helligkeit des durch Elektronenbeugung ermittelten Debye-Scherrer-Beugungsringes mit einem Netzebenenabstand von 0,25 +/- 0,02 nm, umfassend Maghemit, Magnetit und Hämatit und
b) der durch Röntgendiffraktometrie ermittelte der Kristallitdurchmesser des Hämatites mehr als 120 nm ist.

Die äußere Hülle der erfindungsgemäßen Partikel ist amorph. Unter amorph wird ein Material verstanden, bei dem mit den üblichen Methoden der Röntgendiffraktometrie keine Beugungssignale erfasst werden können. Bei der äußeren Hülle handelt es sich um eine dichte Hülle. Unter dicht ist zu verstehen, dass bei Kontakt der Partikel mit Salzsäure unter bestimmten Reaktionsbedingungen weniger als 50 ppm Eisen nachweisbar sind. Dabei werden bei Raumtemperatur 0,33 g der Partikel 15 Minuten lang in Kontakt mit 20 ml 1 N Salzsäurelösung gebracht. Ein Teil der Lösung wird anschließend mittels geeigneter Analysetechniken, beispielsweise ICP (inductively coupled plasma spectroscopy) auf Eisen untersucht. Die Dicke der äußeren Hülle beträgt bevorzugt 1 - 40 nm, besonders bevorzugt 5 - 20 nm, besteht.

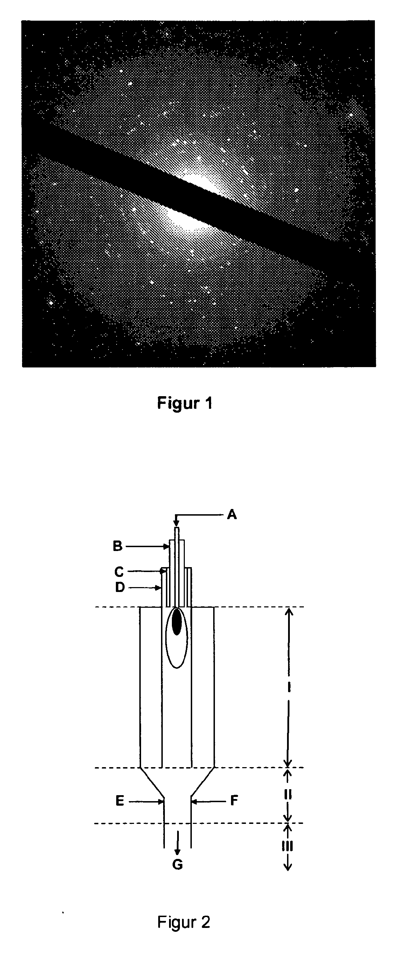

Die H_{0,20nm} und H_{0,25nm}-Werte werden aus der Helligkeit der Debye-Scherrer Beugungsringe erhalten. Die Bestimmung erfolgt mit der iTEM-Software der Fa. SIS. Dazu wird ein rechteckiger Auswertebereich festgelegt. Die Höhe des Rechtecks wird so gewählt, dass der innerste und der äußerste der zu messenden Ringe darin enthalten sind. Breite und Position des Rechtecks werden so gewählt, dass der annähernd waagerechte Linienanteil der Beugungsringe ausgewertet wird. Es wird von jeder Zeile des Rechtecks mit Hilfe der Software das arithmetische Mittel der zugehörigen Grauwerte bestimmt. Die relativen Maxima der Grauwertkurve enthalten die Helligkeit der Ringe und des Untergrundes an der jeweiligen Stelle. Da die Helligkeit des Untergrundes mit wachsendem Radius abnimmt, muss dieser an der Stelle der Ringe ermittelt werden. Dies geschieht durch lineare Interpolation der Untergrundgrauwerte oberhalb und unterhalb der Beugungsringe. Die Differenz der Grauwerte der Peaks und der zugehörigen Untergrundwerte sind die tatsächlichen Helligkeitswerte der Beugungsringe an der jeweiligen Stelle. Figur 1 zeigt typische Elektronenbeugungsringe erfindungsgemäßer Partikel. Der Netzebenenabstand 0,20 nm und 0,29 nm korrespondiert mit Maghemit und Magnetit, während der Netzebenenabstand 0,25 nm mit Maghemit, Magnetit und Hämatit korrespondiert. Aufgrund der störenden Helligkeit im Zentrum der Elektronenbeugung ist Quotient H_{0,20nm}/H_{0,25nm} am besten zur quantitativen Bestimmung geeignet. Ferner erkennt der Fachmann aus

Figur 1 die hohe Kristallinität der erfindungsgemäßen Partikel.

Die Bestimmung des Quotienten H_{0,20nm}/H_{0,25nm} erlaubt auf vergleichsweise einfache Art und Weise die relative Zusammensetzung eines Gemisches umfassend Hämatit, Magnetit und Maghemit, welches gemäß der technischen Aufgabe der vorliegenden Erfindung ein hohe Aufheizrate der Eisen-Silicium-Oxidpartikel gewährleistet, ohne die exakte Zusammensetzung dieses Gemisches zu kennen.

Soll dennoch die absolute Zusammensetzung bestimmt werden, so kann dies durch Röntgendiffraktometrie unter Verwendung von Co-K_{α}-Strahlung in einem Winkelbereich 20 von 10 - 100° erfolgen. Damit ist Maghemit signifikant anhand der Reflexe (110) und (211) im vorderen Winkelbereich nachweisbar. Der Hämatit ist wegen der freistehenden Reflexe eindeutig identifizierbar. Die quantitative Phasenanalyse wird mit Hilfe der Rietveld- Methode ausgeführt, Fehler ca. 10% relativ. Der Kern der erfindungsgemäßen Eisen-Silicium-Oxidpartikel weist bevorzugt einen Anteil an Hämatit von 20 - 60 Gew.-%, besonders bevorzugt 20 - 40 Gew.-%, an Magnetit von 25 - <50 Gew.-%, besonders bevorzugt 30 - 45 Gew.-% und an Maghemit von >30 - 60 Gew.-%, besonders bevorzugt 35 - 50 Gew.-% auf, wobei sich die Anteile auf 100% addieren. Es können weiterhin noch geringe amorphe Eisenoxidandteile vorliegen.

Weiterhin hat es sich als vorteilhaft für die Aufheizrate erwiesen, wenn der Kristallitdurchmesser von Hämatit bevorzugt 125 - 300 nm und ganz besonders bevorzugt 150 - 250 nm, ist.

Bei weiteren bevorzugten Ausführungsformen der erfindungsgemäßen Partikel beträgt der Kristallitdurchmesser von Hämatit und Magnetit, unabhängig voneinander, mehr als 120 nm, und von Maghemit höchstens 70 nm. Dabei werden die Werte nach Debye-Scherrer erhalten. Besonders bevorzugt ist eine Ausführungsform der Erfindung bei der der so ermittelte Kristallitdurchmesser von Hämatit 125 - 300 nm, ganz besonders bevorzugt 150 - 250 nm, ist, von Magnetit 150 - 350 nm, ganz besonders bevorzugt 200 - 300 nm, ist, und von Maghemit 20 - 50 nm, ganz besonders bevorzugt 35 - 45 nm, ist.

Es hat sich weiterhin gezeigt, dass sich eine zwischen Kern und äußerer Hülle befindliche weitere, teilweise oder vollständig ausgebildete, innere Hülle, welche die Elemente Eisen, Silicium und Sauerstoff enthält und die im HR-TEM einen Abstand der Gitternetzebenen von 0,31 +/- 0,02 nm und eine Dicke von in der Regel weniger als 2 nm aufweist, die Aufheizraten positiv beeinflusst.

Die innere Hülle stellt einen Übergangsbereich zwischen amorpher Siliciumdioxidhülle und kristallinem Eisenoxidkern dar, der zu einer ausgezeichneten Adaption zwischen Kern und äußerer Hülle führt. Es wird derzeit davon ausgegangen, dass der Phononentransport und damit die Wärmeleitung von Kern zu äußerer Hülle durch diesen intensiven Verbund verbessert wird, was in der Anwendung der erfindungsmäßen Partikel zu substantiell höheren Aufheizraten führen kann.

Die erfindungsgemäßen Eisen-Silicium-Oxidpartikel weisen bevorzugt einen Gehalt an Eisenoxid, gerechnet als Fe₂O₃, von 60 - 95 Gew.-%, bevorzugt 75 - 90 Gew.-% auf. Der Gehalt an Siliciumdioxid beträgt bevorzugt 5 - 40 Gew.-%, bevorzugt 10 - 25 Gew.-%. Darüber können die erfindungsgemäßen Eisen-Silicium-Oxidpartikel noch geringe Anteile an Verunreinigungen enthalten, die aus den Einsatzstoffen stammen und/oder prozessbedingt sind. In der Regel beträgt der Anteil an Verunreinigungen maximal 1,5 Gew.-%, bevorzugt weniger als 1,0 Gew.-% und besonders bevorzugt weniger als 0,5 Gew.-%.

Die BET-Oberfläche der Partikel beträgt in der Regel 5 bis 50 m²/g. Bevorzugt kann ein Bereich von 10-30 m²/g und besonders bevorzugt 15-20 m²/g sein.

In der Regel liegen die erfindungsgemäßen Eisen-Silicium-Oxidpartikel als Aggregate vor. Die die Aggregate bildenden Primärpartikel können dabei über den Kern und/oder die äußere Hülle verwachsen sein. Dabei ist es für die Aufheizrate vorteilhaft, wenn der Mittelwert des Verzweigungsgrades der Aggregate mindestens 7, bevorzugt 8-20 und besonders bevorzugt 10-15, ist. Zusätzlich kann es vorteilhaft sein, wenn der Mittelwert der Länge der Verzweigungen Aggregates mindestens 500 nm, bevorzugt 700 - 2500 nm und besonders bevorzugt 1000 bis 1500 nm, ist. Die Bestimmung von Verzweigungsgrad und Verzweigungslänge erfolgt durch Auswertung von TEM-Aufnahmen von ca. 700 Aggregaten, bei einer Vergrößerung von 50.000:1, Partikeln mittels digitaler Bildanalyse in Anlehnung an ASTM-3849 unter Verwendung der iTEM Software der Firma Olympus Soft Imaging Solutions GmbH.

Die erfindungsgemäßen Partikel weisen zudem auf ihrer Oberfläche Hydroxylgruppen auf. Diese können mit anorganischen und organischen Oberflächenmodifizierungsmitteln unter Bildung einer Van-der-Waals-Wechselwirkung, einer ionischen oder kovalenten Bindung reagieren und dadurch die Oberfläche der erfindungsgemäßen Eisen-Silicium-Oxidpartikel modifizieren. geeignete Oberflächenmodifizierungsmittel können beispielsweise Alkoxysilane, Carbonsäuren, Nucleinsäuren oder Polysaccharide sein.

Ein weiterer Gegenstand der Erfindung ist ein Verfahren zur Herstellung der erfindungsgemäßen Eisen-Silicium-Oxidpartikel bei dem man
a) in einer ersten Zone, Zone 1, eines Durchflussreaktors ein Gemisch enthaltend
   a1) 0 - 30% der Gesamtmenge einer oder mehrerer, bevorzugt dampfförmiger, hydrolysierbarer und/oder oxidierbarer Siliciumverbindungen,
   a2) ein oder mehrere oxidierbare und/oder hydrolysierbare Eisenverbindungen, die bevorzugt dampfförmig oder in Form eines durch Verdüsen einer oder mehrerer Lösungen erhaltenen Aerosoles vorliegen, a3) ein oder mehrere wasserstoffhaltige Brenngase und
   a4) ein oder mehrere Sauerstoff enthaltende Gase zündet und abreagieren lässt
b) in einer zweiten Zone, Zone 2, des Durchflussreaktors zu diesem Reaktionsgemisch 70 - 100% der Gesamtmenge einer oder mehrerer, bevorzugt dampfförmiger, hydrolysierbarer und/oder oxidierbarer Siliciumverbindungen gibt,
c) in der dritten Zone, Zone 3, des Durchflussreaktors nachfolgend das Reaktionsgemisch, gegebenenfalls kühlt, bevorzugt durch Einspeisung von Wasser, und nachfolgend den Feststoff von gas- oder dampfförmigen Stoffen abtrennt und gegebenenfalls den Feststoff anschließend mit einem Oberflächenmodifizierungsmittel behandelt.

Unter Gesamtmenge, die Summe an Siliciumverbindungen zu verstehen ist, die Zone 1 und Zone 2 eingesetzt werden.

Das erfindungsgemäße Verfahren zeichnet sich unter anderem dadurch aus, dass in Zone 1 nur maximal 30 % der Gesamtmenge der Siliciumverbindungen eingesetzt werden. Es hat sich gezeigt, dass die Zugabe der größeren oder vollständigen Menge der Siliciumverbindung in Zone 2 zum einen zu einer dichten, äußeren Hülle von Siliciumdioxid führt und zum anderen Einfluss auf die Anteile und die Dimensionen der Kernbestandteile hat. Offensichtlich gelingt es hierdurch optimale Bedingungen zu schaffen, bei denen Magnetit und Maghemit für die elektromagnetische Einkopplung von Energie und Hämatit für die Wärmeleitfähigkeit sorgen kann.

Die Wärmeleitfähigkeit kann weiter verbessert werden, wenn die Reaktionsbedingungen so gewählt sind, dass neben der äußeren Hülle noch eine innere Hülle gebildet wird.

Die Reaktionsbedingungen können bevorzugt so gewählt sein, dass in Zone 1 die mittlere Verweilzeit 10 ms - 1 s, besonders bevorzugt 300 - 600 ms, und die Temperatur bevorzugt 900 - 1300°C, besonders bevorzugt 950 - 1250°C, jeweils gemessen 50 cm unter Zündungspunkt, ist.

Weiterhin können die Reaktionsbedingungen bevorzugt so gewählt sein, dass in Zone 2 die mittlere Verweilzeit 0,1 - 10 s, besonders bevorzugt 1,5 - 3,0 s und die Temperatur bevorzugt 400 - 900°C, jeweils gemessen 15 cm oberhalb der obersten Zugabestelle in Zone 2, besonders bevorzugt 700 - 850°C, ist.

Bevorzugt ist eine Ausführungsform der Erfindung bei der die Siliciumverbindung ausschließlich in Zone 2 zugegeben wird. Falls in Zone 1 und Zone 2 Siliciumverbindungen zugegeben werden, so können diese in Zone 1 und Zone 2 gleich oder unterschiedlich sein. Die Siliciumverbindung wird bevorzugt aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl2 , H₄Si, Si(OC₂H₅)₄ und/oder Si(OCH₃)₄, ausgewählt. Besonders bevorzugt wird SiCl₄ und/oder Si(OC₂H₅)₄ eingesetzt.

Die Eisenverbindung wird bevorzugt als Aerosol eingebracht. In der Regel erfolgt die Aerosolbildung aus einer wässerigen Lösung unter Verwendung eines Zerstäubungsgases wie beispielsweise Luft oder Stickstoff und einer Zwei- oder Mehrstoffdüse. Der mittlere Tropfendurchmesser ist bevorzugt kleiner 100 µm, besonders bevorzugt kleiner 50 µm. Als Eisenverbindung wird bevorzugt Eisen(II)chlorid eingesetzt.

In einer besonderen Ausführungsform der Erfindung kann in Zone 2 zusätzlich noch Wasser oder Wasserdampf eingebracht werden. Dabei wird das Wasser oder der Wasserdampf getrennt von der Siliciumverbindung eingebracht, bevorzugt entweder kurz vor oder auf Höhe der Einspeisestelle der Siliciumverbindung. Bevorzugt wird ein molarer Überschuss an Wasser beziehungsweise Wasserdampf verwendet. Besonders bevorzugt kann ein molares Verhältnis Wasser/Siliciumverbindung von 10 - 100 sein.

Als Brenngase können bevorzugt Wasserstoff, Methan, Ethan und/oder Propan eingesetzt werden. Besonders bevorzugt ist Wasserstoff. Als Sauerstoff enthaltendes Gas wird hauptsächlich Luft oder mit Sauerstoff angereicherte Luft eingesetzt. In der Regel wird ein Überschuss an Sauerstoff gegenüber Wasserstoff eingesetzt. Lambda, der Quotient aus Brennstoffmenge zu Sauerstoffmenge, beträgt bevorzugt 1,05 -1,50.

Figur 2 zeigt schematisch eine Ausführungsform des erfindungsgemäßen Verfahrens. Es gilt:
A = Aerosol aus Lösung einer Eisenverbindung und Luft oder Stickstoff
B = Siliciumverbindung und Luft oder Stickstoff
C = Brenngas
D = Sauerstoff enthaltendes Gas
E = Siliciumverbindung und Luft oder Stickstoff
F = Wasserdampf
G = Kühlung und Abscheidung
1, 2, 3 = Zone 1, Zone 2, Zone 3

Ein weiterer Gegenstand der Erfindung ist ein Silikonkautschuk enthaltend die erfindungsgemäßen Eisen-Silicium-Oxidpartikel. Der Anteil an diesen Partikeln beträgt bevorzugt 0,5 - 15 Gew.-% und besonders bevorzugt 3 - 6 Gew.-%.

Ein weiterer Gegenstand der Erfindung ist die Verwendung der erfindungsgemäßen Eisen-Silicium-Oxidpartikel als Bestandteil von Kautschukmischungen, von Polymerzubereitungen, von Klebstoffzusammensetzungen, von durch Schweißen im elektromagnetischen Wechselfeld erhältlichen Kunststoffverbundformkörpern und zur Herstellung von Dispersionen.

### Beispiele

### Analytik

Der Gehalt an Eisenoxid wird durch Aufschluss mit NaOH, Lösen in verdünnter H₂SO₄ und nachfolgender iodometrischer Titration bestimmt.

Die BET- Oberfläche wird bestimmt nach DIN 66131.

Die Bestimmung der H_{0,20nm} und H_{0,25nm}-Werte erfolgt wie vorne beschrieben.

Die quantitative Bestimmung der Kernanteile erfolgt durch Röntgendiffraktometrie. (Reflexion, θ/θ- Diffraktometer, Co-Kα, U = 40kV, I = 35mA; Szintillationszähler, nachgestellter Graphitmonochromator; Winkelbereich (2Θ)/ Schrittweite/ Meßzeit: 10 - 100° / 0,04° / 6s (4h)).

Der Hämatit ist wegen der freistehenden Reflexe eindeutig identifizierbar. Der Maghemit ist signifikant anhand der Reflexe (110) und (211) im vorderen Winkelbereich nachweisbar. Mit Hilfe der Rietveld- Methode wird eine quantitative Phasenanalyse ausgeführt (Fehler ca. 10% relativ). Die quantitative Phasenanalyse erfolgt anhand des set 60 der ICDD-Datenbank PDF4+ (2010). Die quantitative Phasenanalyse und die Kristallitgrößenbestimmung erfolgen mit dem Rietveld-Programm SiroQuant®, Version 3.0 (2005).

Der Feinstruktur der inkludierten Eisenoxidphasen und der Siliciumdioxidhülle wird mittels hochauflösender Transmissionselektronenmikroskopie (HR-TEM) bestimmt. Mittels Elektronenbeugungsanalyse im HR-TEM wird zudem die Kristallinität und Phasenzusammensetzung bestimmt. Die HR-TEM-Aufnahmen und die Elektronenenbeugungsaufnahmen werden mit einem Jeol 2010F-Gerät bei 200 kV Beschleunigungsspannung erstellt.

Die Dicke der äußeren Hülle wird mittels Transmisions-Elektronen-Mikroskopie bestimmt (TEM). Die Netzebenenabstände der inneren Hülle werden mittels hochauflösender Transmisions-Elektronen-Mikroskopie bestimmt (HR-TEM). Die lokalen Elementzusammensetzungen werden mittels flankierenden EDX-Spektren aus Nanospotanalysen (laterale Auflösung ca. 3-4 nm) bestimmt.

Der Verzweigungsgrad und die Verzweigungslänge werden mittels Bildanalyse von ca. 700 Aggregaten aus TEM-Aufnahmen bestimmt. Verzweigungsgrad und - länge werden mittels iTEM-Software der Firma Olympus Soft Imaging Solutions GmbH ausgewertet. Dazu wird mit Hilfe eines morphologischen Filters die Skelettisierung durch die Aufnahme der Endpunkte ermittelt. Die Skelettierung liefert den Verzweigungsgrad des Aggregates (Anzahl der Endpunkte pro Aggregat). Durch die Ermittlung der Endpunkte ist die Längenbestimmung des Aggregates möglich.

Die Aufheizzeit bis zu einer Temperatur von 100°C wird in einer Silikonmasse bestimmt. Die Silikonmasse wird erhalten, indem man 33 g ELASTOSIL^{®} E50, Fa. Momentive Performance Materials, 13 g Silikonöl Typ M 1000, Fa. Momentive Performance Materials, 4 g AEROSIL^{®}150, Fa. Evonik Degussa und 2,5 g, entsprechend 4,76 Gew.-%, des Produktes aus Beispiel 1 mittels eines SpeedMixers 2x30 sec. und 2x45 sec. bei 3000 Upm vermengt. Nachfolgend wird die Silikonmasse in einer Dicke von ca. 1 mm auf einen Glasobjektträger aufgebracht. Der Energieeintrag erfolgt durch Induktion im magnetischen Wechselfeld einer Frequenz von 40 kHz bei einer elektrischen Leistung von 1,9 kW.

Beispiel 1 (gemäß Erfindung):

Zone 1: Ein Gemisch aus 0,10 kg/h dampfförmigem SiCl₄, einem Aerosol, welches durch Verdüsen einer 25 gewichtsprozentigen, wässerigen Lösung von Eisen(II)chlorid, entsprechend 0,88 kg/h, und 3 Nm³/h Stickstoff als Verdüsungsgas bei Raumtemperatur (23°C) mittels einer Zweistoffdüse erhalten wird, 8 Nm³/h Wasserstoff und 20,2 Nm³/h Luft wird in einer ersten Zone, Zone 1, zur Reaktion gebracht. Die mittlere Verweilzeit des Reaktionsgemisches in der Zone 1 beträgt ca. 545 ms. Die Temperatur 50 cm unterhalb des Brennermundes beträgt 1028°C.

Zone 2: In den Strom des ca. 830°C heißen Reaktionsgemisches aus Zone 1 wird ein Gemisch aus 0,26 kg/h dampfförmiges SiCl₄ zusammen mit 3 Nm³/h Stickstoff und getrennt hiervon, in Höhe der Einspeisungsstelle des Gemisches aus SiCl₄ und Stickstoff, 1 kg/h Wasserdampf gegeben. Die mittlere Verweilzeit des Reaktionsgemisches in der Zone 2 beträgt 1,9 s.

Zone 3: Nachfolgend wird das Reaktionsgemisch abgekühlt und der erhaltene Feststoff auf einem Filter von den gasförmigen Stoffen abgeschieden.

Der Feststoff weist einen Gehalt an Eisenoxid, gerechnet als Fe₂O₃, von 82 Gew.-% auf. Seine BET-Oberfläche beträgt 19 m²/g.

Die Debye-Scherrer-Auswertung ergibt für H_{0,20nm} = 586 und für H_{0,25nm} = 4024, womit sich der Quotient H_{0,20nm}/ H_{0,25nm} zu 0,15 ergibt.

Die quantitative Bestimmung der Kernbestandteile mittels Röntgendiffraktometrie ergibt 35 Gew.-% Hämatit, 19 Gew.-% Magnetit und 46 Gew.-% Maghemit.

Die Bestimmung der Kristallitgrößen der Kernbestandteile liefert Hämatit mit 225 nm, Magnetit mit 168 nm und Maghemit mit 40 nm.

Ferner wird die Dicke der Hülle mit ca. 6 nm bestimmt. Mittels Bildanalyse wird der mittlere Verzweigungsgrad zu 13 und die mittlere Verzweigungslänge zu 1400 nm bestimmt. Die Aufheizzeit beträgt 4,7 s.

Die erfindungsgemäßen Beispiele 2 bis 5 werden analog Beispiel 1 ausgeführt. Die Vergleichsbeispiele 6 und 7 werden analog Beispiel 1 ausgeführt, jedoch wird in Beispiel 6 die Gesamtmenge der Siliciumverbindung in Zone 1, in Beispiel 7 werden 80% der Gesamtmenge der Siliciumverbindung in Zone 1 zugeführt. In Tabelle 1 sind die Einsatzstoffe und Reaktionsbedingungen aller Beispiele aufgeführt. In Tabelle 2 sind die physikalisch-chemischen Daten der aus diesen Beispielen erhaltenen Pulver dargestellt.

Die erfindungsgemäßen Eisen-Silicium-Oxidpartikel der Beispiele 1 bis 5 weisen eine deutlich kürzere Aufheizzeit gegenüber den Partikeln aus den Vergleichsbeispielen 6 und 7 auf.

Die Partikel der Beispiele 1 bis 5 weisen eine Übergangszone zwischen Kern und äußerer Hülle auf. HR-TEM-Aufnahmen zeigen in dieser Übergangszone einen Netzebenenabstand von 0,31 nm, der sich deutlich von dem Netzebenenabstand eines Kernbestandteiles mit 0,29 nm unterscheidet. Die Partikel aus den Vergleichsbeispielen 6 und 7 zeigen diese Übergangszone nicht.

**Tabelle 1: Einsatzstoffe und Reaktionsbedingungen**

| **Beispiel** | | | **1** | **2** | **3** | **4** | **5** | **6** | **7** |
|---|---|---|---|---|---|---|---|---|---|
| **Zone 1** | | | | | | | | | |
| | FeCl₂-Lösung (25%) | kg/h | 3,50 | 5,00 | 3,5 | 3,0 | 2,5 | 7,0 | 4,0 |
| | SiCl₄ | kg/h | 0,10 | 0,10 | 0 | 0,3 | 0,1 | 0,55 | 0,50 |
| | Zerstäubergas | Nm³/h | 3,0 | 3,0 | 4,0 | 3,5 | 4,0 | 5,0 | 4,0 |
| | Wasserstoff | Nm³/h | 8,0 | 8,0 | 8,5 | 7,6 | 9,0 | 8,0 | 6,0 |
| | Luft | Nm³/h | 20,2 | 21,0 | 22 | 19,5 | 24,5 | 10,0 | 16,0 |
| | Temperatur | °C | 1028 | 1023 | 1047 | 1029 | 1062 | 903 | 989 |
| | mittlere Verweilzeit | ms | 545 | 505 | 464 | 515 | 426 | | 652 |
| | lambda | | 1,22 | 1,26 | 1,28 | 1,29 | 1,33 | 1,58 | 1,12 |

| **Zone 2** | | | | | | | | | |
|---|---|---|---|---|---|---|---|---|---|
| | SiCl₄ | kg/h | 0,26 | 0,40 | 0,40 | 0 | 0,15 | 0 | 0,10 |
| | Si(OC₂H₅)₄ | kg/h | 0 | 0 | 0 | 0,6 | 0 | 0 | 0 |
| | Zerstäubergas | Nm³/h | 3,0 | 3,0 | 2,5 | 3,0 | 3,0 | 0 | 3 |
| | Wasserdampf | kg/h | 1 | 1 | 1,2 | 1,5 | 1 | 0 | 1 |
| | mittlere Verweilzeit | S | 1,9 | 1,7 | 1,8 | 1,9 | 1,7 | 0,9 | 2,2 |
| | Temperatur | °C | 827 | 841 | 836 | 889 | 897 | 836 | 915 |

**Tabelle 2: Physikalisch-chemische Daten der Pulver**

| **Beispiel** | | **1** | **2** | **3** | **4** | **5** | **6** | **7** |
|---|---|---|---|---|---|---|---|---|
| Eisenoxid | Gew.-% | 82 | 82 | 81 | 63 | 82 | 85 | 75 |
| SiO₂ | Gew.-% | 18 | 18 | 19 | 37 | 18 | 15 | 25 |
| BET-Oberfläche | m²/g | 19 | 15 | 22 | 38 | 47 | 50 | 42 |
| H_{0,20nm} | | 586 | 389 | 522 | 644 | 1507 | 1266 | 1133 |
| H_{0,25nm} | | 4024 | 1925 | 4177 | 3812 | 7734 | 3742 | 2484 |
| H_{0,20nm}/H_{0,25nm} | | 0,15 | 0,20 | 0,12 | 0,17 | 0,19 | 0,34 | 0,46 |
| Anteile Kern | | | | | | | | |
| Hämatit | Gew.-% | 35 | 41 | 24 | 29 | 30 | 9 | 15 |
| Magnetit | Gew.-% | 19 | 16 | 45 | 17 | 41 | 42 | 26 |
| Maghemit | Gew.-% | 46 | 43 | 31 | 54 | 29 | 9 | 49 |
| Kristallitgrößen Kern | | | | | | | | |
| Hämatit | nm | 225 | 133 | 130 | 280 | 178 | 85 | 50 |
| Magnetit | nm | 168 | 230 | 195 | 352 | 219 | 18 | 22 |
| Maghemit | nm | 40 | 36 | 45 | 40 | 48 | 36 | 35 |
| Verzweigungsgrad | | 13,2 | 9,8 | 20,4 | 11,9 | 8,4 | 5,2 | 5,9 |
| Verzweigungslänge | nm | 1402 | 959 | 2338 | 1342 | 1051 | 393 | 429 |
| Dicke äußere Hülle | nm | 6 | 6 | 5 | 7 | 4 | 2-6 | 4-10 |
| Aufheizzeit | S | 4,7 | 4,2 | 5,3 | 7,3 | 6,8 | 14,2 | 9,8 |

## Patentansprüche

1. Eisen-Silicium-Oxidpartikel umfassend einen Kern und eine äußere Hülle, wobei der Kern die Eisenoxidmodifikationen Maghemit, Magnetit und Hämatit enthält und die äußere Hülle im wesentlichen oder ausschließlich aus amorphem Siliciumdioxid besteht, **dadurch gekennzeichnet, dass**
a) H_{0,20nm}/H_{0,25nm} ≤ 0,2 ist, mit
H_{0,20nm} = Helligkeit des durch Elektronenbeugung ermittelten Debye-Scherrer-Beugungsringes mit einem Netzebenenabstand von 0,20 +/- 0,02 nm, umfassend Maghemit und Magnetit und
H_{0,25nm} = Helligkeit des durch Elektronenbeugung ermittelten Debye-Scherrer-Beugungsringes mit einem Netzebenenabstand von 0,25 +/-0,02 nm, umfassend Maghemit, Magnetit und Hämatit und
b) der durch Röntgendiffraktometrie ermittelte der Kristallitdurchmesser des Hämatites mehr als 120 nm ist.

2. Eisen-Silicium-Oxidpartikel nach Anspruch 1, **dadurch gekennzeichnet, dass** der Kristallitdurchmesser von Hämatit und Magnetit, unabhängig voneinander, mehr als 120 nm, und von Maghemit höchstens 70 nm.

3. Eisen-Silicium-Oxidpartikel nach den Ansprüchen 1 oder 2, **dadurch gekennzeichnet, dass** sich zwischen Kern und äußerer Hülle eine weitere, teilweise oder vollständig ausgebildete, innere Hülle befindet, die die Elemente Eisen, Silicium und Sauerstoff enthält und die im HR-TEM einen Abstand der Gitternetzebenen von 0,31 +/- 0,02 nm und eine Dicke weniger als 2 nm aufweist.

4. Eisen-Silicium-Oxidpartikel nach den Ansprüchen 1 bis 3, **dadurch gekennzeichnet, dass** sie einen Gehalt an Eisenoxid, gerechnet als Fe₂O₃, von 60 - 95 Gew.-% aufweisen.

5. Eisen-Silicium-Oxidpartikel nach den Ansprüchen 1 bis 4, **dadurch gekennzeichnet, dass** die sie eine BET-Oberfläche von 5-50 m²/g aufweisen.

6. Eisen-Silicium-Oxidpartikel nach den Ansprüchen 1 bis 5, **dadurch gekennzeichnet, dass** der Mittelwert des Verzweigungsgrades der Aggregate mindestens 7 ist.

7. Eisen-Silicium-Oxidpartikel nach Anspruch 6, **dadurch gekennzeichnet, dass** der Mittelwert der Länge der Verzweigungen eines Aggregates mindestens 500 nm ist.

8. Eisen-Silicium-Oxidpartikel nach den Ansprüchen 1 bis 7, **dadurch gekennzeichnet, dass** sie durch Adsorption, Reaktion an der Oberfläche oder Komplexierung von beziehungsweise mit anorganischen und organischen Reagentien modifiziert sind.

9. Verfahren zur Herstellung der Eisen-Silicium-Oxidpartikel mit einer Kern-Hülle-Struktur gemäß der Ansprüche 1 bis 8, **dadurch gekennzeichnet, dass** man
a) in einer ersten Zone 1 eines Durchflussreaktors ein Gemisch enthaltend
a1) 0 - 30% der Gesamtmenge einer oder mehrerer, hydrolysierbarer und/oder oxidierbarer Siliciumverbindungen,
a2) ein oder mehrere oxidierbare und/oder hydrolysierbare Eisenverbindungen,
a3) ein oder mehrere wasserstoffhaltige Brenngase und
a4) ein oder mehrere Sauerstoff enthaltende Gase
zündet und abreagieren lässt
b) in einer zweiten Zone 2 des Durchflussreaktors zu diesem Reaktionsgemisch 70 - 100% der Gesamtmenge einer oder mehrerer, hydrolysierbarer und/oder oxidierbarer Siliciumverbindungen gibt,
c) in der Zone 3 des Durchflussreaktors nachfolgend das Reaktionsgemisch gegebenenfalls kühlt und nachfolgend den Feststoff von gas- oder dampfförmigen Stoffen abtrennt und gegebenenfalls den Feststoff anschließend mit einem Oberflächenmodifizierungsmittel behandelt.

10. Verfahren nach Anspruch 9, **dadurch gekennzeichnet, dass** in Zone 1 die mittlere Verweilzeit 10 ms - 1 s und die Temperatur in Zone 1 800 - 1300°C ist.

11. Verfahren nach Anspruch 9 oder 10, **dadurch gekennzeichnet, dass** in Zone 2 die mittlere Verweilzeit 0,1 - 10 s und die Temperatur in Zone 2 400 - 800 °C ist.

12. Verfahren nach den Ansprüchen 9 bis 11, **dadurch gekennzeichnet, dass** die Siliciumverbindung ausschließlich in Zone 2 zugegeben wird.

13. Verfahren nach den Ansprüchen 9 bis 12, **dadurch gekennzeichnet, dass** die Siliciumverbindung aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl₂ , H₄Si, Si(OC₂H₅)₄ und/oder Si(OCH₃)₄, ausgewählt ist.

14. Verfahren nach den Ansprüchen 9 bis 13, **dadurch gekennzeichnet, dass** in Zone 2 zusätzlich Wasserdampf oder Wasser eingebracht wird.

15. Silikonkautschuk enthaltend die Eisen-Silicium-Oxidpartikel gemäß der Ansprüche 1 bis 8.

16. Verwendung der Eisen-Silicium-Oxidpartikel gemäß den Ansprüchen 1 bis 8 als Bestandteil von Kautschukmischungen, als Bestandteil von Polymerzubereitungen, als Bestandteil von Klebstoffzusammensetzungen, als Bestandteil von durch Schweißen im elektromagnetischen Wechselfeld erhältlichen Kunststoffverbundformkörpern und zur Herstellung von Dispersionen.

## Claims

1. Iron-silicon oxide particles which comprise a core and an outer shell, where the core contains the iron oxide modifications maghemite, magnetite and haematite and the outer shell consists essentially or exclusively of amorphous silicon dioxide, **characterized in that**
a) B_{0.20nm}/B_{0.25nm} is ≤ 0.2, where
B_{0.20nm} = brightness of the Debye-Scherrer diffraction ring determined by electron diffraction at a lattice plane spacing of 0.20 +/- 0.02 nm, comprising maghemite and magnetite, and
B_{0.25nm} = brightness of the Debye-Scherrer diffraction ring determined by electron diffraction at a lattice plane spacing of 0.25 +/- 0.02 nm, comprising maghemite, magnetite and haematite, and
b) the crystallite diameter of the haematite determined by X-ray diffraction is greater than 120 nm.

2. Iron-silicon oxide particles according to Claim 1, **characterized in that** the crystallite diameter of haematite and magnetite is, independently of one another, more than 120 nm and that of maghemite is not more than 70 nm.

3. Iron-silicon oxide particles according to Claim 1 or 2, **characterized in that** a further, partially or fully formed, inner shell is located between core and outer shell and comprises the elements iron, silicon and oxygen and has a spacing of the lattice planes of 0.31 +/- 0.02 nm in the HR-TEM and a thickness of less than 2 nm.

4. Iron-silicon oxide particles according to any of Claims 1 to 3, **characterized in that** they have an iron oxide content, calculated as Fe₂O₃, of 60 - 95% by weight.

5. Iron-silicon oxide particles according to any of Claims 1 to 4, **characterized in that** they have a BET surface area of 5 - 50 m²/g.

6. Iron-silicon oxide particles according to any of Claims 1 to 5, **characterized in that** the average degree of branching of the aggregates is at least 7.

7. Iron-silicon oxide particles according to Claim 6, **characterized in that** the average length of the branches of an aggregate is at least 500 nm.

8. Iron-silicon oxide particles according to any of Claims 1 to 7, **characterized in that** the particles have been modified by adsorption, reaction on the surface or complexation of or with organic and inorganic reagents.

9. Process for producing the iron-silicon oxide particles having a core-shell structure according to any of Claims 1 to 8, **characterized in that**
a) in a first zone, zone 1, of a flow-through reactor, a mixture comprising
a1) 0 - 30% of the total amount of one or more hydrolysable and/or oxidizable silicon compounds,
a2) one or more oxidizable and/or hydrolysable iron compounds,
a3) one or more hydrogen-containing fuel gases and
a4) one or more oxygen-containing gases
is ignited and allowed to react,
b) in a second zone, zone 2, of the flow-through reactor, 70-100% of the total amount of one or more hydrolysable and/or oxidizable silicon compounds is added to this reaction mixture,
c) in zone 3 of the flow-through reactor, the reaction mixture is then optionally cooled, and the solid is then separated off from materials in gas or vapour form and the solid is then optionally treated with a surface modifying agent.

10. Process according to Claim 9, **characterized in that** the average residence time in zone 1 is 10 ms - 1 s and the temperature in zone 1 is 800 - 1300°C.

11. Process according to Claim 9 or 10, **characterized in that** the average residence time in zone 2 is 0.1 - 10 s and the temperature in zone 2 is 400 - 800°C.

12. Process according to any of Claims 9 to 11, **characterized in that** the silicon compound is added exclusively in zone 2.

13. Process according to any of Claims 9 to 12, **characterized in that** the silicon compound is selected from the group consisting of SiCl₄, CH₃SiCl₃, (CH₃)₂SiCl₂, (CH₃) 3SiCl, HSiCl₃, (CH₃)₂HSiCl and CH₃C₂H₅SiCl₂, H₄Si, Si(OC₂H₅)₄ and Si(OCH₃)₄.

14. Process according to any of Claims 9 to 13, **characterized in that** water vapour or water is additionally introduced in zone 2.

15. Silicone rubber comprising the iron-silicon oxide particles according to any of Claims 1 to 8.

16. Use of the iron-silicon oxide particles according to any of Claims 1 to 8 as a constituent of rubber mixtures, of polymer preparations, of adhesive compositions, of moulded polymer composites which can be obtained by fusion in an alternating electromagnetic field and for producing dispersions.

## Revendications

1. Particules d'oxyde de fer-silicium comprenant un noyau et une enveloppe extérieure, le noyau contenant les formes d'oxyde de fer maghémite, magnétite et hématite et l'enveloppe extérieure étant essentiellement ou exclusivement constituée de dioxyde de silicium amorphe, **caractérisées en ce que**
a) H_{0,20nm}/H_{0,25nm} ≤ 0,2, avec
H_{0,20nm} = intensité de l'anneau de diffraction de Debye-Scherrer déterminée par diffraction d'électrons avec une distance interréticulaire de 0,20 ± 0,02 nm, comprenant la maghémite et la magnétite, et
H_{0,25nm} = intensité de l'anneau de diffraction de Debye-Scherrer déterminée par diffraction d'électrons avec une distance interréticulaire de 0,25 ± 0,02 nm, comprenant la maghémite, la magnétite et l'hématite, et
b) le diamètre de cristallite de l'hématite calculé par diffractométrie de rayons X est supérieur à 120 nm.

2. Particules d'oxyde de fer-silicium selon la revendication 1, **caractérisées en ce que** le diamètre de cristallite de l'hématite et de la magnétite, indépendamment l'un de l'autre, est supérieur à 120 nm, et celui de la maghémite est d'au plus 70 nm.

3. Particules d'oxyde de fer-silicium selon les revendications 1 ou 2, **caractérisées en ce qu'**une enveloppe intérieure supplémentaire, partielle ou totale, se trouve entre le noyau et l'enveloppe extérieure, qui contient les éléments fer, silicium et oxygène et qui présente en MET-HR une distance des plans réticulaires de 0,31 ± 0,02 nm et une épaisseur inférieure à 2 nm.

4. Particules d'oxyde de fer-silicium selon les revendications 1 à 3, **caractérisées en ce qu'**elles présentent une teneur en oxyde de fer, calculée sous la forme de Fe₂O₃, de 60 à 95 % en poids

5. Particules d'oxyde de fer-silicium selon les revendications 1 à 4, **caractérisées en ce qu'**elles présentent une surface BET de 5 à 50 m²/g.

6. Particules d'oxyde de fer-silicium selon les revendications 1 à 5, **caractérisées en ce que** la valeur moyenne du degré de ramification des agrégats est d'au moins 7.

7. Particules d'oxyde de fer-silicium selon la revendication 6, **caractérisées en ce que** la valeur moyenne de la longueur des ramifications d'un agrégat est d'au moins 500 nm.

8. Particules d'oxyde de fer-silicium selon les revendications 1 à 7, **caractérisées en ce qu'**elles sont modifiées par adsorption, réaction sur la surface ou complexation de ou avec des réactifs inorganiques et organiques.

9. Procédé de fabrication des particules d'oxyde de fer-silicium à structure noyau-enveloppe selon les revendications 1 à 8, **caractérisé en ce que**
a) dans une première zone 1 d'un réacteur à écoulement, un mélange contenant
a1) 0 à 30 % en poids de la quantité totale d'un ou de plusieurs composés de silicium hydrolysables et/ou oxydables,
a2) un ou plusieurs composés de fer oxydables et/ou hydrolysables,
a3) un ou plusieurs gaz de combustion contenant de l'hydrogène et
a4) un ou plusieurs gaz contenant de l'oxygène est allumé et laissé réagir
b) dans une deuxième zone 2 du réacteur à écoulement, 70 à 100 % en poids de la quantité totale d'un ou de plusieurs composés de silicium hydrolysables et/ou oxydables sont ajoutés à ce mélange réactionnel, puis
c) dans la zone 3 du réacteur à écoulement, le mélange réactionnel est éventuellement refroidi, puis le solide est séparé des substances gazeuses, puis le solide est éventuellement traité avec un agent de modification de la surface.

10. Procédé selon la revendication 9, **caractérisé en ce que** le temps de séjour moyen dans la zone 1 est de 10 ms à 1 s et la température dans la zone 1 est de 800 à 1 300 °C.

11. Procédé selon la revendication 9 ou 10, **caractérisé en ce que** le temps de séjour moyen dans la zone 2 est de 0,1 à 10 s et la température dans la zone 2 est de 400 à 800 °C.

12. Procédé selon les revendications 9 à 11, **caractérisé en ce que** le composé de silicium est introduit exclusivement dans la zone 2.

13. Procédé selon les revendications 9 à 12, **caractérisé en ce que** le composé de silicium est choisi dans le groupe constitué par SiCl₄, CH₃sicl₃, (CH₃) ₂SiCl₂, (CH₃) ₃SiCl, HSiCl₃, (CH₃) ₂HSiCl et CH₃C₂H₅SiCl₂, H₄Si, Si(OC₂H₅) ₄ et/ou Si(OCH₃)₄.

14. Procédé selon les revendications 9 à 13, **caractérisé en ce que** de la vapeur d'eau ou de l'eau est également introduite dans la zone 2.

15. Caoutchouc de silicone contenant les particules d'oxyde de fer-silicium selon les revendications 1 à 8.

16. Utilisation des particules d'oxyde de fer-silicium selon les revendications 1 à 8 en tant que constituant de mélanges de caoutchouc, en tant que constituant de préparations polymères, en tant que constituant de compositions adhésives, en tant que constituant de corps moulés composites plastiques pouvant être obtenus par soudure dans un champ électromagnétique alternatif, et pour la fabrication de dispersions.
